# EUROPEAN PATENT APPLICATION

(11) **EP 0 658 421 A1**
(43) Date of publication of application: **21.06.1995**
(21) Application number: 94203586.6
(22) Date of filing: 09.12.1994
(51) Int. Cl.: B32B 27/32

(54) **Coextruded multilayer film for containers of sterilizable fluids**

(30) Priority: 17.12.1993 CH 3771/93
(71) Applicant: BIEFFE MEDITAL S.A., CH-6900 Lugano (CH)
(72) Inventor: Lambert, Philippe, CH-6926 Montagnola (CH); Buzio, Pier Paolo, I-28100 Novara (IT)
(74) Representative: Incollingo, Italo

(57) **Abstract**

The flexible coextruded multilayer sheet for the manufacture of puches bags, containers of liquids to be steam sterilized at about 121°C comprises at least three layers (A-B-C) made of polyolefin (Co)-polymers, at least one of said layers, the central one (B), comprises (Co)-polyolefins having a melting point below 21°C ("non retortable"), the inner layer (A) and outer layer (C) consisting of "retortable" polyolefins.

The central layer (B) comprises, at least partially, polyolefinic regranulated material.

## Description

The present invention concerns coextruded multilayer films for the manufacture of containers of fluids requesting a steam sterilization treatment, for instance in autoclave at about 121° C or more. The coextruded structures according to the invention are based exclusively on halogen free particularly chlorine free, polyolefinic materials such as the propylene and ethylene polymers and respective (co-)polymers with minor quantities of alpha-olefins and/or elastomers. Characteristically said structures do not contain adhesive materials such as aromatic adhesive and polyolefins grafted with maleic anhydride used as bonding tie resins.

As known, it is commercially available a wide range of basic films which, for semplicity reaseons may be grouped in the two following classes:
I) mono-layer films of ethylene-butylene co-polymers with density below 0.9, which are soft, elastic and very transparent. Their melting point is however below 100° C; they are tacky even at room temperature and the friction coefficient is well above the values acceptable in the process of forming and filling the bags, the so called FFS-form-fill-seal processing. The friction can be reduced by adding a slip agent as based on high molecular weight amides (erucamide-oleamide-steramide etc.) in large concentration but at the expenses of the monolayer film clarity.
II) Monolayer films made of straight reactor thermoplastic polyolefins as those obtained by HIMONT CATALLOY technology (terpolymers of propylene, ethylene and ethylene-propylene rubber produced in a series of reactors) which are soft and generally clear and which can be made heat-resistant to the retorting process by a carefull selection of their grades. However they are tacky even at room temperature and only high amounts of slip agents would reduce their friction to make them processable in FFS equipment but this is at the expense of the film clarity- Furthermore when stored during a certain time the film blushes as low molecular weight entities migrate to the surface.

Therefore it can be stated that monolayer films of groups I) and II) have the required softness to make bags, pouches, cases and the like for sterilized fluids however the treatment of sterilization at 121° C or more does not lead to an acceptable product. For the sake of simplicity we can therefore say that these materials are soft but not sterilizable (retortable).

Many, many solutions of this problem have been proposed, among which the following ones can be cited. The US patent N° 4,326 574 (BIEFFE-SAFTA) teaches that triple laminates of polypropylene (PP), polyamide (PA) and polyetilene (PE) are suitable for pouches of parenteral solutions sterilized with steam; however these structures are not purely polyolefinic but contain polyamides and adhesives based on aromatic substances and cannot be re-granulated in form of clear perfectly compatible compounds.

The US Patent N° 4,273386 (Grace) indicates that in one of its embodiments a purely polyolefinic film can be used however not without a polymeric adhesive layer which is not strictly polyolefinic (polyolefin grafted with maleic anhydride).

The US Patents N° 4,323 477, N° 4,488 154 and N° 4,558 042 (Grace) mention, in some embodiments, films of polyolefins with ethylen-vinyl-acetate (EVA) and/or ethylene-metacrylate (EMA) but said ethylene copolymers are acid and induce the fall of the solution pH; so in the case of US P. N° 4,488 154 the use of an alkaline metal carbonate is recommended. The US Patents N° 4,857 409, N° 4,699 832 (corresponding to the Eur. Pat. N° 165.791) and N° 4,769 261 (corresponding to the E.P. N° 358 465) (Exxon Chemical) teach that a multilayer polyolefin structure containing in its core a high proportion of a rubber (EPDM = etylene propylene -diene terpolymer; EPR, ethylene-propylene rubber; butyl rubber, PIB etc.) can be used for parenteral solution packaging. However the rubber-polyolefin blend must be homogenized at the melting point and leads to a two phases compound which is not strictly a compatible blend. Indeed a whitening caused by stress occurs when the structure is bended. The US Patent N° 4,778 697 (ANCC/Baxter) indicates that a multilayer structure consisting of a blend of two polyolefins with an elastomer in one of its layers can be used for parenteral solutions, it does however not mention a possible use of structures consisting exclusively of polymers directly coming out of reactors. The US Patents N° 4,528 220 (Shell) and N° 4,536 549 (EL PASO) teach also that two polyolefins blends can be used for intraveneous solution packaging, however there is no indication therein that pure resins from reactors could be used for each layer of the multilayer structures. Finally US Patent N° 4,210 686 (Baxter) teaches the possible use of a multilayer polyolefin structure containing in its core a high proportion of styrene block copolymer (SEBS).

None of these prior art documents indicates thus that pure polyolefinic materials can be used as separated layers in a coextruded structure. We have surprisingly found that when not-sterilizable resins are encapsulated (as central layer B) between two sterilizable polyolefin layers (acting as inner layer A and outer layer C) the resulting structure ABC-in which B is the soft unsterilizable polyolefin, for example, of the above groups I and II: - 1) is clear as long as layers A and C are made out of clear polyolefins and a perfect viscosity match exists between A and B and B and C; 2) strong: - the absence of interlayer adhesion is the result of the high tackiness of the soft un-retortable polyolefin: said high tackiness impacted negatively the monolayer film I and II but has a positive influence on the coextruded structure according to the invention, bonding agents beings thus not necessary: - 3) even though layer B is in a molten state while retorting, same B is supported by, the heat resistant layers A and C; -4) low friction: as said friction is a surface property it is determined by the characteristics of A and C and not by those of B.

The characteristics of the composite coextruded structures according to the present invention are recited in the claims. In one embodiment of the invention the completely polyolefinic structure consists of three layers: -
1) an inner layer A) and an outer layer C) made of a sterilizable polyolefin represented by: a propylene polymer or copolymers of propylene with minor proportions of ethylene, butylene or of an elastomer; a copolymer of ethylene with minor quantities of alpha-olefins having at least six carbon atoms, said polyolefins being possibly blended with a minor proportion of elastomer such as styrene block copolymers (SEBS-SIS-SBS), butylrubber, PIB, EPDM; -2) at least an inner layer (B) consisting of amorphous soft material having a melting point below the sterilization temperature- such as an ethylene butylene copolymer with density below 0.9- a thermoplastic polyolefin or a blend of said materials with a sterilizable polyolefin and/or an elastomer of the type specified in paragraph 1)-
The edge trims produced by the film extrusion and the pouch making process can be regranulated and recycled into a perfectly compatible compound that can be incorporated into one of the coextruded film layers (B and D) without damaging its clarity, or used for another transparent film packaging application. The pouches after use can be also washed, regranulated into a similar compound for reuse in clear film and/or moulding applications.

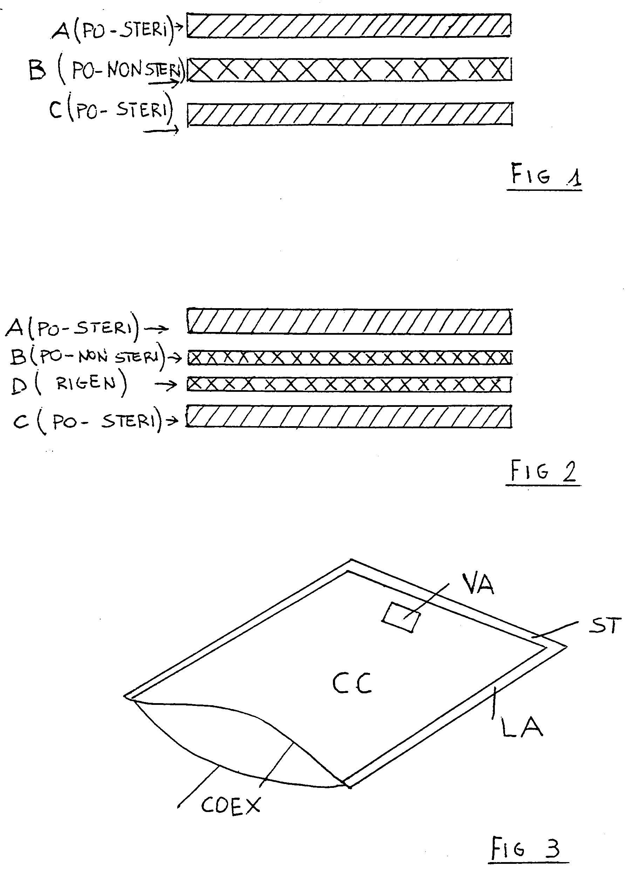

The pouches CC (fig. 3) can be manufactured with the aid of various thermosealing technics (with warm bar, heat pulses, warm knife) and of ultrasound welding, which bond any one side (LA, ST) of the multilayer coextruded film to an other side or/and to printed pieces, access ports, valves VA, which are used to fill/drain the pouch content or to add thereto an other product.

Advantageously the bags formed of the coextruded film COEX according to the invention can be easely incenerated as the combustion of all components of the resin is exothermic and does not release chlorinated toxic fumes.

The different features and advantages of the invention will better appear from the description of the (not limitative) embodiments illustrated in the examples and in the relevant drawing.

### Examples 1-3

With procedure and apparatus per sè known, three sheets (as shown in figure 1) were coextruded each consisting of three layers (A-B-C) of sterilizable polyolefine material (PO, STERI) for the layers A and C and of not-sterilizable polyolefins (PO, NON STERI) for layer B, the compositions of which are indicated hereunder.

| A PO. STERI | B PO NON STERI | C PO STERI |
|---|---|---|
| A1) polypropylrene (PP) commercialized as PCD DAPLEN 226 SB | B1) thermoplastic polyolefine commercialized as HIFAX FX 7084XCP | C1) as A1) |
| A2)linear low density polyethylene containing small amount of octene C₈ LLDPE as DSM STAMYLEX 1046 | B2)ethylene-butene copolymer having density below 0.9 as the Mitsui Tafmera 4085 or Exxon Exact 4021 | C2) as A2) |
| A3) blend of A1) or A2) with 20% of SEBS (Shell Kraton G 1652) | B3) blend of B1) or B2) with 20% of PIB (EXXON Vistanex ML 100) | C3)as in A3) |

The layer A is the one in contact with the solution, emulsion or fluid inside the pouch.

| | | |
|---|---|---|
| THICKNESS 60 microns | 60 microns | 50 microns |

### Examples 4-5

| A | B | C |
|---|---|---|
| as in example 1) | B4) soft not-sterilizable polyolefin | as in exemple 1 |
| " | B5) of 80/20 blend of B2) or B3) with regranulated film | " |
| THICKNESS 60 microns | 60 microns | 50 microns |

### Example 6

With per sè known techniques a composite sheet as shown in figure 2 was coextruded having four layere A-B-D-C each having following composition:

| A | B | D | C |
|---|---|---|---|
| as in example 1 | as in example 1 | pure regranulated film | as in example 1 |
| THICKNESS: 60 microns | 30 microns | 30 microns | 50 microns |

According to a feature of the invention, the thicknesses of A) and C) are critical for obtaining strong sterilizable pouches.
They depend essentially on two factors:
- F1: The weight of the liquid inside the pouch: during the sterilization process layer B) melts and the pouch resistance comes only from the outer layers resistances.
- F2: The thickness of layer B): the thickness of A) and C) must increase with the increase of the thickness of layer B)

In general the layers thicknesses are to be maintained within following ranges:

| | | |
|---|---|---|
| A: | 10-80 preferably | 40 for pouches of at least 1 liter |
| B: | 40-200 preferably | 50 for pouches of at least 1 liter |
| C: | 10-80 preferably | 40 for pouches of at least 1 liter |

The pouches or bags can be formed with the aid of the technology according to the US Patents N° 4,656.813 and N° 4,685?915 assigned to Bieffe S.p.A.

## Claims

1. Flexible multilayer coextruded film for the manufacture of containers of solutions, emulsions or fluids requesting a steam sterilizable treatment in autoclave at about 121° C or more (so called "retorting"), said containers being easely incinerated without release of toxic fumes, characterized in that the film comprises at least three layers (A-B-C) each consisting substantially of only olefin (co)-polymers, without bonding adhesive materials containing aromatic or grafted compounds, at least one (B) of said layers consisting of co-polyolefins not sterilizable in autoclave not-retortable.

2. Film according to claim 1, characterized by: - a core or central layer (B) of not sterilizable polyolefins, having a melting point below 121°C and a thickness of from 50 to 200 microns and selected from the group consisting of: i) thermoplastic polyolefins; ii) ethylene-butylene copolymers with a density below 0.9; iii) blends of i) and/or ii) and/or a "retortable" polyolefin in a minor proportion, and/or a regranulated material;- an inner layer A) and outer layer C) each having a thickness of from 10 to 80 microns, consisting of "retortable" polyolefins selected from the group consisting of: x) polymers of propylene or copolymers of propylene with ethilene and/or butylene; y) (co-)polymers of ethylene with a minor proportion of an alpha-olefin containing at least six carbon atonms; and z) blends of x) and/or y) and minor quantity ef elastomers.

3. Film according to claim 2, characterized in that the central core B) is divided in more layers, at least one of which (D) consists of only regranulated polyolefinic material.

4. Bags containing steam sterilizable fluids, formed of a multilayer coextruded film, at least one of said layers comprising polyolefinic material not sterilizable in an autoclave, according to the preceding claims, characterized in that the thicknesses of the inner A) and outer C) layers which during the sterilization at about 121° C contribute to impart resistance to the bag, increase with increasing weight of the fluid contained in said bag, and with increasing thickness of layer B), and are above 40 microns for thickness of B) above 50 microns and for fluid quantity of at least 1 liter.
